Europäisches Patentamt

European Patent Office

Office européen des brevets

(19)

(11) Numéro de publication : **0 170 605**
**B1**

(12) **FASCICULE DE BREVET EUROPÉEN**

(45) Date de publication du fascicule du brevet :
**11.10.89**

(51) Int. Cl.⁴ : **A 01 C 17/00**

(21) Numéro de dépôt : **85460012.9**

(22) Date de dépôt : **08.07.85**

(54) **Machine d'épandage centrifuge de produits en grains.**

(30) Priorité : 09.07.84 FR 8411052

(43) Date de publication de la demande :
05.02.86 Bulletin 86/06

(45) Mention de la délivrance du brevet :
11.10.89 Bulletin 89/41

(84) Etats contractants désignés :
BE DE GB NL

(56) Documents cités :
FR-A- 1 419 150
FR-A- 2 310 941
FR-A- 2 334 589
FR-A- 2 351 887
FR-A- 2 537 381
US-A- 3 085 807

(73) Titulaire : **Etablissements F. BUREL SA**
**Route de Rennes**
**F-35220 Chateaubourg (FR)**

(72) Inventeur : **Burel, Jacques**
**L'Epine**
**. F-35220 Chateaubourg (FR)**

(74) Mandataire : **Martin, Jean-Jacques et al**
**Cabinet REGIMBEAU 11, rue Franz Heller**
**F-35700 Rennes (FR)**

## Description

La présente invention concerne une machine d'épandage centrifuge de produits en grains ou pulvérulents, tels que des engrais, comportant trémie, dispositif de transfert et un ou des disques de projection.

Les épandeurs centrifuges de produit en grains sont connus. Ils sont essentiellement constitués d'une trémie et d'un disque ou d'une paire de disques de projection avec, entre la trémie et le ou les disques, un dispositif de transfert du produit tombant de la trémie vers le ou les disques. A titre indicatif, on trouvera des épandeurs centrifuges décrits dans les brevets FR-A-2 416 635, FR-A-2 450 551, FR-A-2 464 629, FR-A-2 477 366, EP-A-0 074 154 et EP-A-0 074 155.

L'uniformité de la densité surfacique de produit distribué dans une bande traitée de terrain dépend de plusieurs paramètres :

— les caractéristiques du produit à distribuer, telles que sa densité volumique et sa granulométrie,
— la densité surfacique désirée,
— l'état du sol, nu ou avec végétation,
— l'inclinaison des axes des disques,
— la vitesse de rotation des disques,
— la zone de réception du produit sur le disque à la sortie du dispositif de transfert.

Parmi les paramètres permettant de définir la bande de terrain traitée, la position de la zone de chute du produit en grains sur le disque d'épandage est importante, comme cela est mentionné dans le document FR-A-1 419 150, qui montre une machine selon le préambule de la revendication 1. Dans ce document, on a décrit deux goulottes. L'une a ses bords latéraux relevés jusqu'en bas ce qui entraîne que l'on fait tomber plus de produit aux deux extrémités de la zone de chute en défavorisant la zone centrale. L'autre goulotte comprend, en plus des bords relevés jusqu'en bas, des cloisons intermédiaires qui ramènent plus de produit vers le centre. De telles goulottes fixes ne conviennent que pour l'épandage d'un seul produit et ne permettent notamment pas de faire varier la largeur d'épandage.

L'objet principal de l'invention est de proposer un dispositif de transfert comportant des moyens réglables pour déposer le produit à épandre sur le (ou les) disque(s) de projection, ces moyens étant adaptés pour réaliser une division légère du jet de grains en deux parties, augmentant ainsi l'aire de la surface du disque sur laquelle tombe ce jet, tout en lui donnant une forme et une position bien définies.

Un autre objet de l'invention consiste à prévoir des palettes de disques de projection permettant d'obtenir une répartition plus uniforme du produit distribué.

Les objets de l'invention mentionnés ci-dessus sont atteints par la mise en œuvre de combinaisons de moyens définies dans la revendication 1 et les revendications dépendantes qui définissent des exemples de réalisation préférentiels.

Les caractéristiques de l'invention mentionnées ci-dessus apparaîtront plus clairement à la lecture de la description suivante d'exemples de réalisation, ladite description étant faite en relation avec les dessins joints, parmi lesquels :

la Fig. 1 est une vue schématique en coupe transversale d'une machine d'épandage suivant l'invention,

la Fig. 2 est une vue en élévation de côté de la roue d'entraînement des convoyeurs de la machine de la Fig. 1,

la Fig. 3 est une vue en coupe verticale de la roue de la Fig. 2, suivant la ligne III-III,

la Fig. 4 est une vue schématique, à plus grande échelle qu'à la Fig. 1, de l'extrémité du convoyeur droit de la Fig. 1 et de la goulotte sur laquelle il déverse les grains,

la Fig. 5 est une vue en coupe selon la ligne V-V de la Fig. 4,

la Fig. 6 est une vue en plan du disque de projection droit de la machine de la Fig. 1,

les Figs. 7 à 9 sont des vues de face de différents exemples de réalisation de goulottes guidant les grains fournis par un convoyeur vers une zone de la surface d'un disque, et

les Figs. 10 à 13 sont des vues parallèles en élévation montrant différentes formes de bords externes de pales éjectrices fixées sur un disque de projection.

La machine d'épandage comprend une trémie 1 de forme classique. Le fond de la trémie 1 comporte transversalement une ouverture longitudinale sous laquelle sont disposés deux convoyeurs formés de tapis roulants 2 et 3. En variante, la trémie peut comporter deux ouvertures, chacune correspondant à un convoyeur. La trémie peut avoir des parois anti-tassement 4 et 5. Les parois 4 et 5 permettent d'éviter une charge trop importante du matériau contenu dans la trémie sur les tapis 2 et 3. Elles peuvent être en forme de dièdre et leur hauteur peut être réglable. De plus, dans la trémie 1, un chapeau en forme de dièdre 6, solidaire de celle-ci, est prévu au-dessus de l'espace séparant les deux tapis 2 et 3.

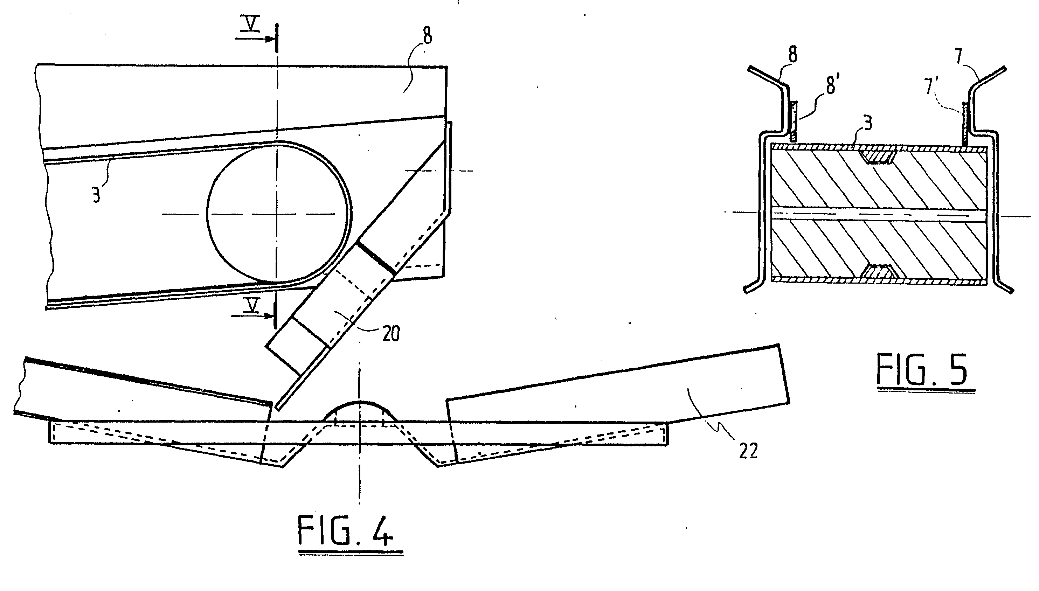

Les convoyeurs comportent des parois latérales fixes 7 et 8 respectivement de chaque côté des tapis roulants 2 et 3. Une paroi 8 est montrée à la Fig. 4 et la Fig. 5 montre les deux parois 7 et 8 d'un même convoyeur. Les bords supérieurs des parois 7 et 8 sont fixés aux côtés longitudinaux des ouvertures dans le fond de la trémie. Les parois 7 et 8 ont un profil tel que leur espacement soit inférieur à la largeur des tapis 2 et 3 au-dessus de ceux-ci comme on le voit à la Fig. 5. Sur ces parois, on peut fixer des bavettes d'étanchéité 7' et 8'. Les bavettes 7' et 8' sont de préférence mince et rigides. Elles affleurent les tapis 2 et 3 sans les toucher.

Les tapis roulants 2 et 3 sont entraînés par une roue 9 au moyen d'une transmission 10 à plusieurs rapports de démultiplication. La roue 9 se trouve à l'extrémité d'un bras 11 et est réglable latéralement pour s'aligner avec une roue du tracteur. La roue 9 est libre et appuie sur le sol par son poids ou par la force d'un ressort. La roue 9 est relevable au moyen d'un vérin connectable sur la prise hydraulique du tracteur. De plus, l'entraînement des tapis est débrayé par un moyen connu quand la roue tourne en marche arrière, c'est-à-dire quand la machine d'épandage recule. Dans un exemple de réalisation préféré, les tapis 2 et 3 comportent un guide trapézoïdal montré à la Fig. 5.

La roue 9 peut être un disque d'acier plein comportant des crampons 12 sur ses jantes. Les crampons 12 sont en forme de croissant et leurs plans font un certain angle, de l'ordre de 15°, avec les rayons qui s'y rapportent, tout en étant perpendiculaires au plan de la roue. On dispose ainsi d'un angle d'attaque des crampons 12 avec le sol différent selon que l'on utilise la roue 9 dans un sens ou dans l'autre, sens que l'on détermine en fonction de l'état du terrain. Si la roue n'est pas assez lourde pour tourner et entraîner les tapis 2 et 3 par son poids seul, un ressort entre le bras 11 et le bâti de la machine peut être prévu. Dans un exemple de réalisation préféré, les crampons 12 sont de deux tailles, disposés en alternance, de sorte que les extrémités externes des grands crampons sont sur un cercle de plus grand rayon que celui des extrémités des petis crampons. En alternant ainsi petits et grands crampons, on évite que de la terre se coince entre eux, en réduisant l'efficacité.

Quand la machine d'épandage avance, le produit est amené à l'extérieur de la trémie 1 par les tapis roulants 2 et 3 entre les languettes 7' et 8' et les parois 7 et 8. Des volets transversaux 13 et 14 montés coulissants dans des glissières 15 et 16 solidaires des parois de la trémie permettent de régler la hauteur de la couche de grain sur les tapis 2 et 3 à la sortie de la trémie 1. Les extrémités extérieures des couloirs formés par les languettes 7' et 8', les parois 7 et 8 et les tapis 2 et 3 sont en outre obturées par des volets 17 et 18. Les volets 17 et 18 sont maintenus fermés par de faibles ressorts, mais ils n'entravent pas le débit du produit entraîné par les tapis 2 et 3. Les volets 17 et 18 permettent d'éviter la perte de produit lors des cahots ou sur des terrains non plats, quand la machine ne fonctionne pas. Dans le même but, les tapis 2 et 3 font un léger angle avec l'horizontale de façon à être légèrement élévateurs.

Arrivé à l'extrémité des tapis roulants 2 et 3, le produit tombe dans des goulottes 19 et 20 montées sur un support solidaire des extrémités des parois 7 et 8. Les goulottes 19 et 20 font un angle d'environ 40°, en général, avec la verticale. En variante, leur inclinaison peut être réglable. Lesdites goulottes seront décrites en détail ultérieurement.

Les goulottes 19 et 20 dirigent le produit sur des disques de projection 21 et 22. Les disques 21 et 22 sont reliés à la prise de force du tracteur par une transmission 23, si bien que la vitesse de rotation des disques 21 et 22 est fonction du régime moteur du tracteur. Dans un exemple de réalisation préféré, les disques 21 et 22 tournent à 810 t/mn pour un régime prise de force motrice de 540 t/mn.

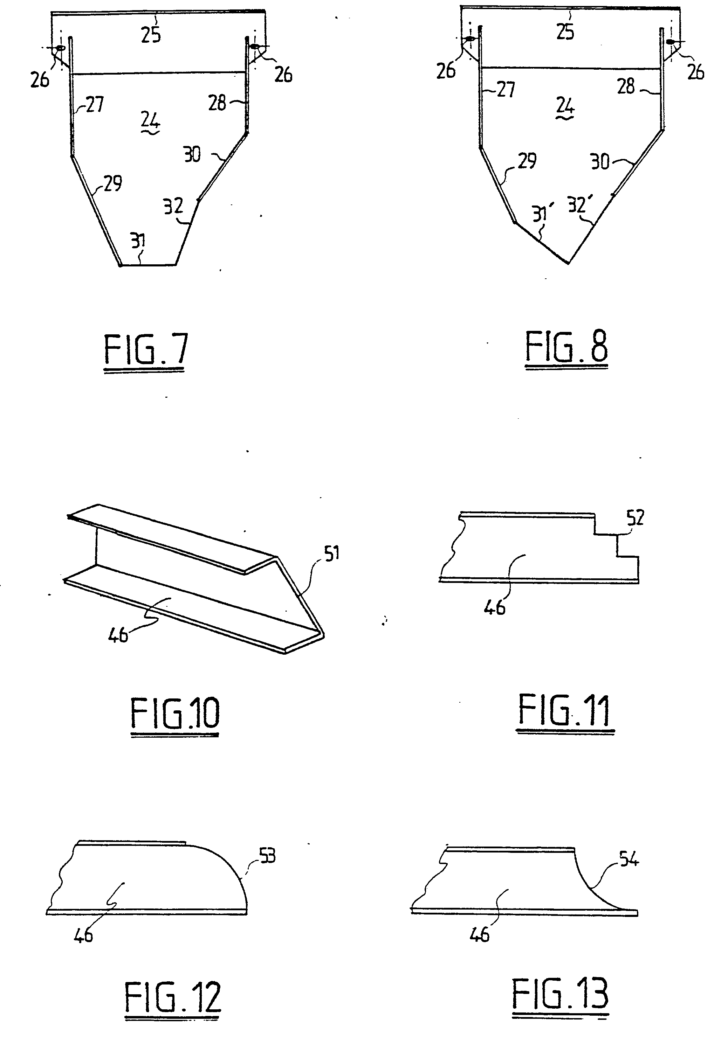

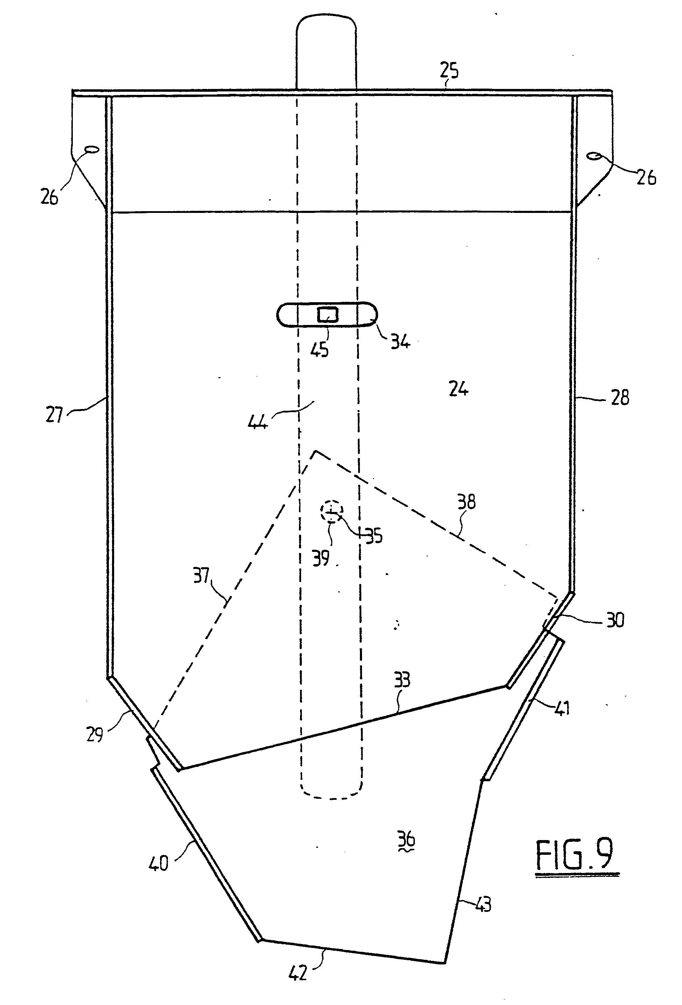

La goulotte de la Fig. 7, qui peut être une goulotte 19 ou 20, est formée d'une plaque 24 dont la partie supérieure est de forme rectangulaire et la partie inférieure de forme polygonale plus complexe, comme on l'expliquera ci-après.

Le bord supérieur 25 est plié pour former une paroi verticale qui est fixée sur les retours des parois 7 et 8, par des moyens adéquats passés dans des trous 26. Comme le montre la Fig. 4, le plan de la plaque 24 fait un angle de 40° environ avec le plan vertical de la paroi 25. Dans un autre exemple de réalisation, il est prévu un support de goulotte permettant de régler la position de celle-ci selon plusieurs degrés de liberté.

Les bords latéraux 27 et 28 de la partie supérieure de la plaque 24 sont également repliés verticalement pour former les rebords hauts de la goulotte.

La partie inférieure de la goulotte de la Fig. 7 a la forme d'un pentagone, non régulier, dont un côté est adjacent au bas de la partie supérieure de la plaque 24. D'une extrémité de ce côté adjacent part un côté oblique 29 faisant un angle d'environ 23° avec le bord 27. De l'autre extrémité du côté adjacent, part un côté oblique 30 faisant un angle d'environ 36° avec le bord 28. Les côtés 29 et 30 ont leurs bords pliés comme les bords 27 et 28. Les côtés 29 et 30 ont des directions concourantes de manière que leurs bords pliés guident les grains pour réduire la largeur du jet de grains tombant sur un disque 21 ou 22. Dans la goulotte de la Fig. 7, le bord 29 est sensiblement plus long que le bord 30.

De l'extrémité inférieure du bord 29, par un côté 31 pratiquement perpendiculaire à l'axe longitudinal de la goulotte, tandis que de l'extrémité inférieure du bord 30, part un côté 32 presque parallèle à l'axe de la goulotte. Les côtés 31 et 32 n'ont pas leurs bords relevés, de manière à laisser le grain glisser librement. Le sommet du pentagone, commun aux côtés 31 et 32, a pour effet de diviser légèrement le jet de grains en deux parties, ce qui augmente l'aire de la surface du disque sur laquelle tombe les grains et lui donne une forme et une position bien définies.

La goulotte de la Fig. 8 a une forme semblable à celle de la Fig. 7, sauf que ses côtés, non pliés, 31' et 32', correspondant aux côtés 31 et 32, sont tous deux obliques par rapport à l'axe de la goulotte et que le sommet qu'ils définissent est sensiblement sur cet axe.

On peut prévoir une goulotte dans laquelle la configuration du bec, c'est-à-dire la partie comprise entre les côtés 31 et 32 ou 31' et 32' est déplaçable par rapport au fond de la goulotte et déformable au moyen de réglages, dont un exemple de réalisation particulièrement satisfaisant est représenté à la Fig. 9. Dans cet exemple de réalisation les côtés non pliés 31 et 32, Fig. 7, ou 31' et 32', Fig. 8, sont remplacés par un seul côté non plié rectiligne 33 rejoignant les extrémités

inférieures des côtés 29 et 30. Le fond de la plaque 24 comporte entre les côtés 27 et 28, une ouverture oblongue 34 d'axe longitudinal perpendiculaire aux côtés 27 et 28. Le centre de symétrie de l'ouverture 34 est équidistant des côtés 27 et 28. Sous la face inférieure de la plaque 24, entre le côté 33 et l'ouverture 34, se trouve un pivot 35 solidaire de la plaque 24. Le pivot 35 est sur l'axe de symétrie de l'ouverture 34 parallèle aux côtés 27 et 28.

La partie bec de la goulotte est formée d'une plaque sensiblement hexagonale 36. Ses côtés supérieurs 37 et 38 font pratiquement un angle droit. Près du sommet formé par les côtés 37 et 38, la plaque 36 comporte un trou 39 dans lequel passe le pivot 35. Un côté replié 40 fait un angle de 120° environ avec le côté 37 tandis qu'un côté 41, également replié, fait un angle pratiquement droit avec le côté 38. Les dimensions des côtés 37 et 38 sont telles que lorsque la plaque 36 est fixée sous la plaque 24, le pivot 35 étant dans le trou 39, les verticales passant par les extrémités libres des côtés 29 et 30 coupent respectivement les côtés repliés 40 et 41. En pratique, les côtés 40 et 41 ne sont pas repliés tout-à-fait jusqu'à leurs extrémités supérieures, afin que la plaque 36 puisse pivoter d'un certain angle autour du pivot 35 sans que les côtés repliés 40 et 41 butent sur les côtés repliés 37 et 38. La plaque 36 comporte enfin deux côtés inférieurs non repliés 42 et 43 formant un V. Le côté 42 fait un angle d'environ 130° avec le côté 40 et le côté 43 un angle d'environ 200° avec le côté 41.

Sous la plaque 36, est soudée un bras en fer plat 44 dont l'axe longitudinal passe par le centre du trou 39 et par le barycentre de la plaque 36, ou non loin de celui-ci. A l'endroit du trou 39, le bras 44 prolonge la plaque 36 à partir du sommet formé par ses côtés 37 et 38. Au niveau de l'ouverture 34 de la plaque 24, le bras 44 comporte un bossage 45 sur sa face supérieure. Le bossage 45 rentre dans l'ouverture 34 et sert de butée pour limiter le pivotement de la plaque 36. Un moyen de réglage du pivotement de la plaque 36 reliant le bras 44 est prévu sur la face arrière du côté replié 25. La plaque 36 est maintenue en place à l'aide d'une goupille, non montrée, traversant le pivot 35 passé dans le trou 39. Cette goulotte permet de déplacer en rotation le bec en V formé par le sommet compris entre les côtés 42 et 43 par rapport aux disques d'épandage.

On comprendra que les exemples montrés aux Fig. 7, 8 et 9 ne sont nullement limitatifs et qu'on peut prévoir d'autres formes de becs pour les goulottes 19 ou 20.

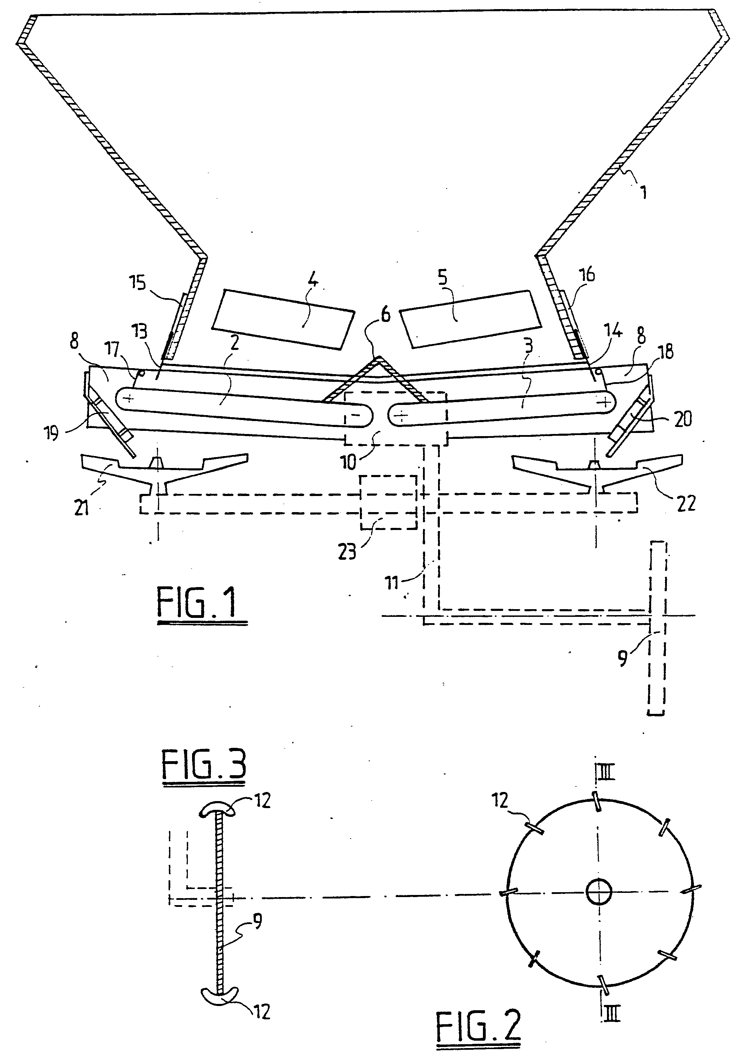

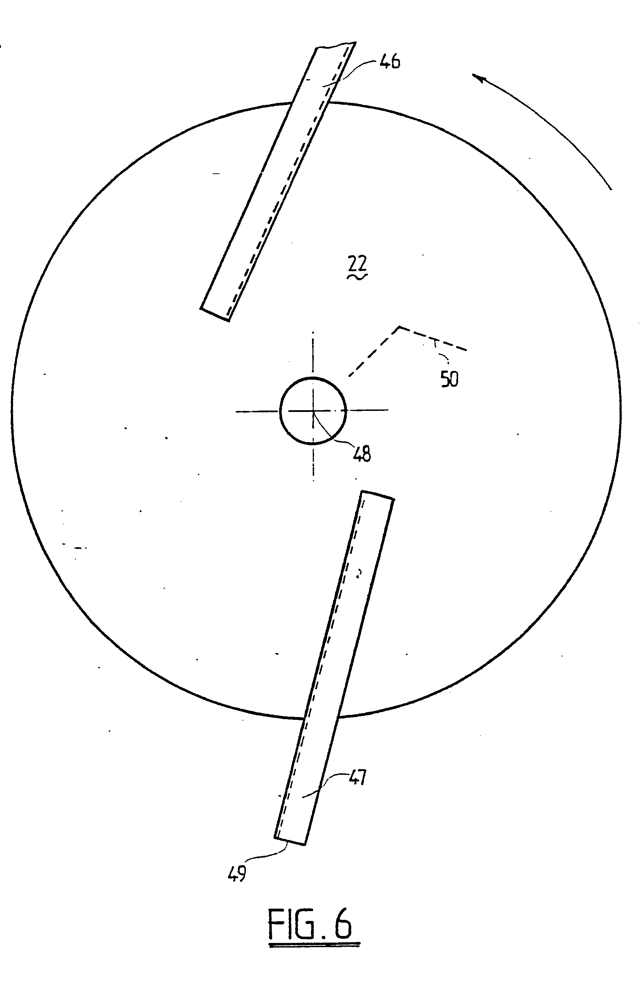

A la Fig. 6, on a montré une vue en plan du disque 22 de la Fig. 1. Le disque 22 comporte deux pales éjectrices 46 et 47 dont les directions ne sont pas radiales. En effet, leurs directions passent à des distances différentes du centre 48 du disque 22. Toutefois, les pales 46 et 47 barrent pratiquement toute la largeur du disque 22. De plus, leurs directions, bien que proches d'être parallèles, ne le sont pas exactement. A noter que les pales 46 et 47 coupent le bord du disque en des points pratiquement diamétralement opposés. Cette disposition permet d'obtenir des diagrammes de distribution légèrement différents.

Chaque pale 46 ou 47 a une extrémité 49 au-delà du cercle extérieur du disque. Près de cette extrémité, chaque pale a un profil en U, ouvert vers la direction d'éjection des grains. En général, la paroi arrière des pales 46 et 47 est inclinée en pente descendante dans la direction d'éjection des grains, suivant un léger angle avec la verticale.

A la Fig. 6, la ligne brisée, en traits tirets, 50 représente la projection des côtés 31 et 32 du bas d'une goulotte. Le sommet de la ligne brisée 50 se trouve sur un rayon qui fait un angle d'environ 45° avec le diamètre qui passe sensiblement par les points où les pales traversent le cercle extérieur du disque. Par ailleurs, la distance de ce sommet au centre du disque est d'environ 0,4 fois le rayon du disque.

A la Fig. 10, on a montré la pale 46 dont le bord externe 51 du profilé en U n'est pas dans un plan vertical, mais oblique selon un angle d'au moins 45° par rapport au plan vertical perpendiculaire à la pale. La distance radiale du point le plus bas de 51 est plus grande que celle de son point le plus haut. Il en résulte qu'un grain lancé par le bas de 51 a une vitesse plus grande qu'un grain lancé par le haut de 51. Ainsi, l'obliquité de 51 permet d'élargir le diagramme de projection de la pale.

Au lieu de choisir pour l'allure du bord 51 une ligne droite, on peut, comme à la Fig. 11, prévoir une ligne brisée 52, ou comme à la Fig. 12, une ligne connexe 53, ou comme à la Fig. 13, une ligne concave 54.

La ligne brisée 52, Fig. 11 peut ne comporter qu'une seule portion horizontale. En variante encore, ladite portion horizontale peut comporter un retour horizontal dans la direction d'éjection des grains.

Les pales 46 et 47 peuvent être réversibles, c'est-à-dire que leur bord supérieur peut devenir le bord inférieur et vice-versa. On peut également monter des pales dont les extrémités ont des formes différentes sur un même disque. Enfin, les disques de projection peuvent comporter plus de deux pales éjectrices.

On comprendra aisément que l'invention, notamment la multiplicité des goulottes ou le réglage de leur bec, permet d'effectuer un réglage très précis de la machine d'épandage en fonction du travail à réaliser et des caractéristiques du produit à épandre. A titre d'exemple, une goulotte spéciale est prévue pour commencer l'épandage dans un champ. En effet, la densité surfacique n'est généralement pas uniforme et on est obligé de prévoir un certain recouvrement à chaque passage, sur le côté de la bande d'épandage le plus éloigné de la machine qui est la zone recevant en principe le moins de produit. Selon l'invention, on a prévu une goulotte ou un réglage de goulotte permettant d'obtenir une bande d'épandage moins large, mais uniforme, pour effectuer le premier passage dans un champ.

## Revendications

1. Machine d'épandage centrifuge de produits en grains ou pulvérulents comportant trémie (1), dispositif de transfert et disques de projection (21, 22), dans laquelle le dispositif de transfert est constitué par un ou des convoyeurs (2, 3) recevant des grains de la trémie (1) pour les déposer sur le ou les disques de projection (21, 22) et une goulotte (19, 20) disposée entre chaque extrémité d'arrivée des convoyeurs et le dessus du disque de projection correspondant (21, 22), la goulotte étant choisie dans un jeu de goulottes dont chaque bec déversoir a une forme différente, caractérisée en ce que la goulotte est formée d'une plaque (24) dont la partie supérieure est de forme générale rectangulaire et la partie inférieure de forme générale polygonale dont les deux côtés inférieurs adjacents (31, 32 ou 31', 32') n'ont pas leurs bords relevés et forment un V.

2. Machine d'épandage selon la revendication 1, caractérisé en ce que la plaque est divisée en deux plaques correspondant aux deux parties supérieure et inférieure, les deux plaques étant reliées par des moyens de liaison réglables (35, 39, 34, 45), la plaque inférieure comportant les deux côtés inférieurs (42, 43) sans bords relevés, lesdits moyens de liaison réglables permettent un mouvement relatif du sommet du V de la plaque inférieure.

3. Machine d'épandage selon la revendication 1 ou 2, caractérisée en ce que un bord inférieur (31) est pratiquement perpendiculaire à l'axe longitudinal de la goulotte et l'autre bord inférieur (32) presque parallèle à l'axe de la goulotte.

4. Machine d'épandage selon la revendication 1 ou 2, caractérisée en ce que le point commun aux deux bords inférieurs (31', 32') se trouve sur l'axe de la goulotte.

5. Machine d'épandage selon une des revendications 1 à 4, caractérisée en ce que les pales éjectrices (46, 47) des disques (21, 22) ont leur bord externe (51, 52, 53, 54) non vertical mais oblique, incurvé ou en gradins de manière à communiquer aux grains des vitesses d'éjection différentes selon leur altitude dans la couche de grains entraînée par la pale (46 ou 47).

6. Machine d'épandage selon la revendication 5, caractérisée en ce que les pales éjectrices (46, 47) des disques (21, 22) ont leur bord externe (51) oblique selon un angle supérieur à 45° par rapport à la verticale.

## Claims

1. Centrifugal spreading machine for granular or powdered products, comprising a hopper (1), a transport device and spreading discs (21, 22), in which the transport device consists of one or more conveyors (2, 3) receiving grains from the hopper (1) and depositing them on the spreading disc or discs (21, 22), and a chute (19, 20) located between the delivery end of each conveyor and the top of the corresponding spreading disc (21, 22), the chute being selected from a set of chutes each of whose delivery lips is of a different shape, characterized in that the chute is formed by a plate (24) whose upper part is of a generally rectangular shape and whose lower part is of a generally polygonal shape in which the two adjacent lower edges (31, 32 or 31', 32') do not have raised sides and form a V.

2. Spreading machine according to claim 1, characterized in that the plate is divided into two plates corresponding to the upper and lower parts, the two plates being connected by adjustable means of connection (35, 39, 34, 45), the lower plate including the two lower edges (42, 43) without raised sides, the said adjustable means of connection permitting relative movement of the point of the V of the lower plate.

3. Spreading machine according to claim 1 or 2, characterized in that one lower edge (31) is practically perpendicular to the longitudinal axis of the chute and the other lower edge (32) is almost parallel to the axis of the chute.

4. Spreading machine according to claim 1 or 2, characterized in that the point common to the two lower edges (31', 32') is located on the axis of the chute.

5. Spreading machine according to one of claims 1 to 4, characterized in that each of the ejecting blades (46, 47) of the discs (21, 22) has an outer edge which is not vertical but is oblique, incurved or stepped in such a way that different ejection velocities are imparted to the grains according to their height in the layer of grains picked up by the blade (46 or 47).

6. Spreading machine according to claim 5, characterized in that the ejecting blades (46, 47) of the discs (21, 22) have an oblique outer edge (51) at an angle of more than 45° with respects to the vertical.

## Patentansprüche

1. Schleuderstreumaschine für körnige oder pulverisierte stoffe mit einem Trichter (1), einer Fördervorrichtung und Schleuderscheiben (21, 22), in der die Fördervorrichtung aus einem oder mehreren Förderern (2, 3), die die Körner vom Trichter (1) aufnehmen, um sie auf die eine oder die Schleuderscheiben (21, 22) abzulegen, und durch eine Rutsche (19, 20) gebildet ist, die zwischen jedem Ankunftsende der Förderer und oberhalb der entsprechenden Schleuderscheibe (21, 22) angeordnet ist, wobei die Rutsche aus einem Satz von Rutschen gewählt ist, von denen jeder Ausflußschnabel eine unterschiedliche Form aufweist, dadurch gekennzeichnet, daß die Rutsche aus einer Platte (24) gebildet ist, deren oberer Bereich allgemein Rechteckform und deren unterer Bereich allgemein Polygonalform aufweist, von der die beiden benachbarten unteren Seiten (31, 32 oder 31', 32') ihre Ränder nicht hochgeschlagen haben und ein V bilden.

2. Schleuderstreumaschine nach Anspruch 1, dadurch gekennzeichnet, daß die Platte in zwei Platten unterteilt ist, die den beiden Bereichen, dem oberen und unteren, entsprechen, wobei die beiden Platten aus einstellbaren Verbindungseinrichtungen (35, 39, 34, 45) gebildet sind, wobei die untere Platte zwei untere Seiten (42, 43) ohne angehobene Ränder aufweist, wobei die einstellbaren Verbindungseinrichtungen eine relative Bewegung der Spitze des V der unteren Platte erlauben.

3. Schleuderstreumaschine nach Anspruch 1 oder 2, dadurch gekennzeichnet, daß ein unterer Rand (31) praktisch senkrecht zur Längsachse der Rutsche verläuft und der andere untere Rand (32) nahezu parallel zur Achse der Rutsche verläuft.

4. Schleuderstreumaschine nach Anspruch 1 oder 2, dadurch gekennzeichnet, daß der den beiden unteren Rändern (31′, 32′) gemeinsame Punkt sich auf der Achse der Rutsche befindet.

5. Schleuderstreumaschine nach einem der Ansprüche 1 bis 4, dadurch gekennzeichnet, daß die Auswurfblätter (46, 47) der Scheiben (21, 22) einen Außenrand (51, 52, 53, 54) aufweisen, der nicht vertikal, jedoch schräg, gebogen oder treppenförmig derart ausgebildet ist, um den Körnern unterschiedliche Auswurfgeschwindigkeiten zu verleihen, gemäß deren Höhe in der Körnerschicht, die durch das Blatt (46 oder 47) mitgenommen wird.

6. Schleuderstreumaschine nach Anspruch 5, dadurch gekennzeichnet, daß die Auswurfblätter (46, 47) der Scheiben (21, 22) ihren außenrand (51) schräg gemäß einem Winkel größer als 45° bezüglich der Vertikalen haben.

FIG.1

FIG.3

FIG.2

1

FIG. 4

FIG. 5

EP 0 170 605 B1

FIG.6

3

FIG.7

FIG.8

FIG.10

FIG.11

FIG.12

FIG.13

4

FIG.9